# EUROPEAN PATENT APPLICATION

(11) **EP 2 712 168 A2**
(43) Date of publication of application: **26.03.2014**
(21) Application number: 13185233.7
(22) Date of filing: 19.09.2013
(51) Int. Cl.: H04N 1/00, G06F 17/30

(54) **Image forming apparatus that has a server function**

(30) Priority: 21.09.2012 JP 2012208115; 26.10.2012 JP 2012236910; 18.09.2013 US 201314030608
(71) Applicant: Kyocera Document Solutions Inc., Chuo-ku Osaka 540-8585 (JP)
(72) Inventor: Ogishi, Ryosuke, Chou-KU, Osaka 540-8585 (JP)
(74) Representative: Fox-Male, Nicholas Vincent Humbert

(57) **Abstract**

An image forming apparatus (1) includes a server (19) configured to create a web page including modifiable device information, wherein the web page is displayed on a client terminal, in response to a creation request transmitted from the client terminal. The image forming apparatus (1) also includes a request standby unit configured to place the received creation request in a standby state upon reception of the creation request from the client terminal on which the web page is being displayed. The image forming apparatus (1) additionally includes an event detecting unit (21) configured to detect a modification indicating event for the device information. The image forming apparatus (1) further includes a standby releasing unit configured to release the creation request from the standby state when the modification indicating event occurs and cause the server (19) to create a web page including modified device information.

## Description

### FIELD

The present disclosure generally relates to an image forming apparatus that has a server function and a display program.

### BACKGROUND

Unless otherwise indicated herein, the description in this background section is not prior art to the claims in this application and is not admitted to be prior art by inclusion in this section.

A typical image forming apparatus has a server function that can create a web page. This type of image forming apparatus can use the created web page to display manipulation inputs, operation states, and other device information on a client terminal on a network.

The typical image forming apparatus also uses its display device as a client terminal to display the device information through the web page.

The above related technology is problematic because a web client method is used, and therefore it can be difficult to provide real-time displays on the display device of an image forming apparatus that requires real-time like operation. One possible solution to this problem may be shortening a polling interval, but this solution will lead to an increased system load.

### SUMMARY

An image forming apparatus according to an embodiment of the present disclosure includes a server, a request standby unit, an event detecting unit, and a standby releasing unit. The server is configured to create a web page including modifiable device information. The web page is displayed on a client terminal in response to a creation request transmitted from the client terminal. The request standby unit is configured to place the received creation request in a standby state upon reception of the creation request from the client terminal on which the web page is being displayed. The event detecting unit is configured to detect a modification indicating event for the device information. The standby releasing unit is configured to release the creation request from the standby state when the modification indicating event occurs and to cause the server create a web page that includes modified device information.

A display method according to an embodiment of the present disclosure includes creating, via a server, a web page including modifiable device information, wherein the web page is displayed on a client terminal in response to a creation request transmitted from the client terminal. The method also includes placing, via a request standby unit, the received creation request in a standby state upon reception of the creation request from the client terminal on which the web page is being displayed. The method additionally includes detecting, via a standby releasing unit, the modification indicating event for the device information. The method further includes releasing, via a standby releasing unit, the creation request from the standby state when the modification indicating event occurs. The method yet even further includes causing, via the standby releasing unit, the server to create a web page including modified device information.

An image forming apparatus according to an embodiment of the present disclosure includes a web client and a server. The web client includes a creation request unit, a storage unit, a modification information request unit, and a screen display unit. The creation request unit is configured to output a creation request for a web page and cause a server to create the web page including modifiable device information. The storage unit is configured to store configuration information of the web page received from the server. The modification information request unit is configured to output an output request for the modification information to modify the device information when there is no transition request from a currently displayed web page to another web page, and cause the server to transmit modification information. The screen display unit is configured to display the received web page on a display screen, and display, on the display screen, an updated web page on the basis of the modified configuration information reflecting the modification information when receiving the modification information from the server.

A display method according to an embodiment of the present disclosure includes outputting, via a creation request unit, a creation request for a web page. The method includes causing, via the creation request unit, a server to create the web page including modifiable device information. The method also includes storing, via a storage unit, configuration information of the web page received from the server. The method additionally includes outputting, via a modification information request unit, an output request for the modification information to modify the device information unless there is the transition request from a currently displayed web page to another web page. The method further includes causing, via the modification information request unit, the server to transmit modification information. The method yet further includes displaying, via a screen display unit, the received web page on a display screen. The method yet even further includes displaying, via the screen display unit, on the display screen, an updated web page on the basis of the modified configuration information reflecting the modification information when receiving the modification information from the server.

Additional features and advantages are described herein, and will be apparent from the following detailed description and the figures.

### BRIEF DESCRIPTION OF THE DRAWINGS

In the accompanying drawings:

Fig. 1 illustrates the structure of an image forming apparatus according to the first embodiment of the present disclosure;

Fig. 2 is a flowchart illustrating display processing executed by the image forming apparatus in Fig. 1;

Fig. 3 is a sequence diagram illustrating the display processing executed by the image forming apparatus in Fig. 1.

Fig. 4 illustrates the structure of an image forming apparatus according to the second embodiment of the present disclosure;

Fig. 5 is a flowchart illustrating display processing executed by the image forming apparatus in Fig. 4; and

Fig. 6 is a sequence diagram illustrating the display processing executed by the image forming apparatus in Fig. 4.

### DETAILED DESCRIPTION

Embodiments of the present disclosure will be described with reference to the drawings.

### I. First Embodiment

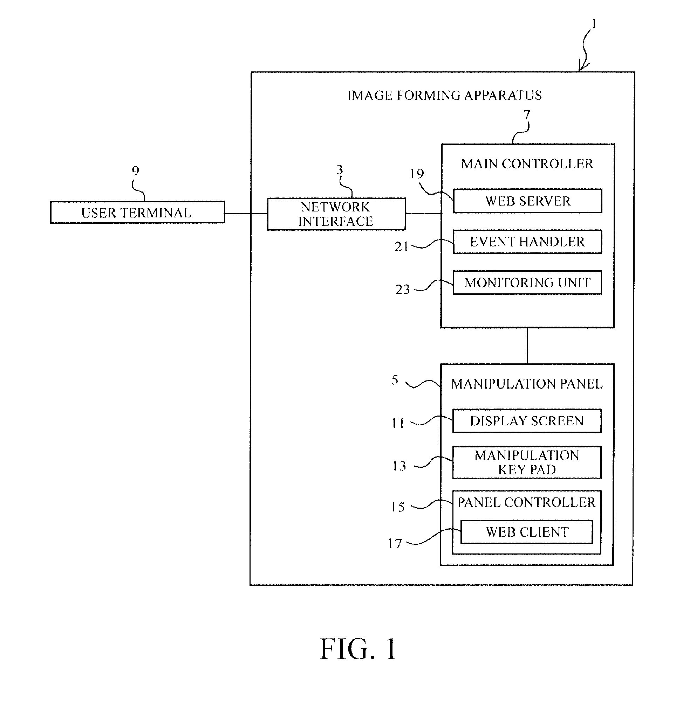

Fig. 1 illustrates the structure of an image forming apparatus according to a first embodiment of the present disclosure.

The image forming apparatus 1 in Fig. 1 can be, for example, a digital multifunctional peripheral that includes various image forming functions such as a copy function; a scan function; a print function; and a facsimile function. The digital multifunctional peripheral may also include server functions that may be used to create web pages.

The image forming apparatus 1 in the first embodiment includes a network interface 3, a manipulation panel 5, and a main controller 7 as part of the server functions.

The network interface 3 transmits and receives data to and from a user terminal 9 that is connected to the network interface 3 through a local area network (LAN) or other network.

The user terminal 9 can be an extra-apparatus client terminal disposed outside the main unit of the image forming apparatus. The user terminal 9 includes a computer and other information processing apparatuses, and may be used to transmit a creation request for the web page (for example, a hypertext transfer protocol (HTTP) request) to the image forming apparatus 1. In addition, the user terminal 9 can receive a response transmitted from the image forming apparatus 1 and can display a web page according to the response (for example, an HTTP response) on a browser. The displayed web page can indicate manipulation inputs that may be used to manipulate the image forming apparatus 1, a manipulation state, and device information.

The displayed device information includes the settings and operation state of the image forming apparatus 1. The device information includes information that can be modified by operating the image forming apparatus 1 and by a manipulation input supplied by the user. Such information can include a setting state, for example print conditions, and an operation state, for example the number of counted sheets, an out-of-paper state, and a device error in a function.

The manipulation panel 5 can be an intra-apparatus client terminal disposed inside the main unit of the image forming apparatus. The manipulation panel 5 includes a display device that has a display screen 11, a manipulation key pad 13, and a panel controller 15.

The display screen 11 includes a touch-panel liquid crystal display screen and can display a web page via a browser. The display screen 11 can display manipulation inputs that may be used to manipulate the image forming apparatus 1, a manipulation state, and device information through the web page.

The manipulation key pad 13 includes a plurality of buttons to accept manipulation inputs and other components. For example, the manipulation key pad 13 accepts inputs to execute functions of the image forming apparatus 1.

The panel controller 15 can be a computer with information processing functions, and can include a central processing unit (CPU), a read-only memory (ROM), and a random-access memory (RAM).

The CPU is a control element (computing device) that executes a program to, for example, control a display based on inputs from display screen 11 and inputs from the manipulation key pad 13. The ROM stores programs and the like. The RAM is used as, for example, a working area that temporarily stores a program to be executed and data used during execution of the program.

According to the first embodiment, the panel controller 15 executes a client program according to an activation manipulation and operates as a web client 17. The activation manipulation can be performed by, for example, a user creating inputs from the manipulation key pad 13 and display screen 11.

The web client 17 implements client functions. According to the first embodiment, the web client 17 transmits a first creation request to the main controller 7 at the time of activation. The web client 17 receives a response transmitted from a web server 19 and displays a web page on the browser of the display screen 11 according to the response.

Upon reception of the response, the web client 17 transmits a next creation request. Thus, creation is requested while a web page is being displayed. The creation request made while a web page is being displayed can be distinguished from the first creation request by a variable in header information and the like.

While a web page is being displayed, a creation request can also be made by, for example, polling at a specific time interval or supplying an input from the display screen 11 or manipulation key pad 13. In this case, a next request must not be transmitted until a response to an already transmitted creation request is received.

The main controller 7 is a computer having information processing functions and includes a CPU, a ROM, and a RAM. In the main controller 7, the CPU executes a program to control the system of the image forming apparatus 1 and to perform other processing.

The main controller 7 executes server programs including a display program to operate as the web server 19, an event handler 21 as the event detecting unit, and a monitoring unit 23 as the request standby unit and standby releasing unit.

The web server 19 implements server functions and creates a web page in response to a creation request from the user terminal 9 or manipulation panel 5. The web page includes device information at the time of creation request reception. The web page is written in, for example, Hypertext Makeup Language (HTML). The web server 19 transmits the created web page to the user terminal 9 or manipulation panel 5, from which the creation request has been transmitted, as a response.

The event handler 21 implements an event detecting function. Specifically, if detecting a modification indicating event for modifiable device information, the event handler 21 notifies the monitoring unit 23 of the event. The monitoring unit 23 is notified of modification indicating events that indicate, for example, a modified printing condition, the number of counted sheets, an out-of-paper state, and a device error for a function.

The monitoring unit 23 implements a request standby function and a standby releasing function. Specifically, if receiving a creation request from the user terminal 9 or manipulation panel 5 while a web page is being displayed, the monitoring unit 23 places the received creation request in a standby state. In the first embodiment, a creation request from the user terminal 9 is not placed in a standby state, but a creation request from the manipulation panel 5 is placed in a standby state. However, it is also possible to place both a creation request from the user terminal 9 and a creation request from the manipulation panel 5 in a standby state.

After the creation request has been placed in the standby state, the monitoring unit 23 monitors a modification indicating event for device information. When a modification indicating event occurs (i.e., the monitoring unit 23 receives a notification from the event handler 21) the monitoring unit 23 releases the creation request from the standby state. The monitoring unit 23 then causes the web server 19 to create a web page including changed device information and to transmit the created web page as a response.

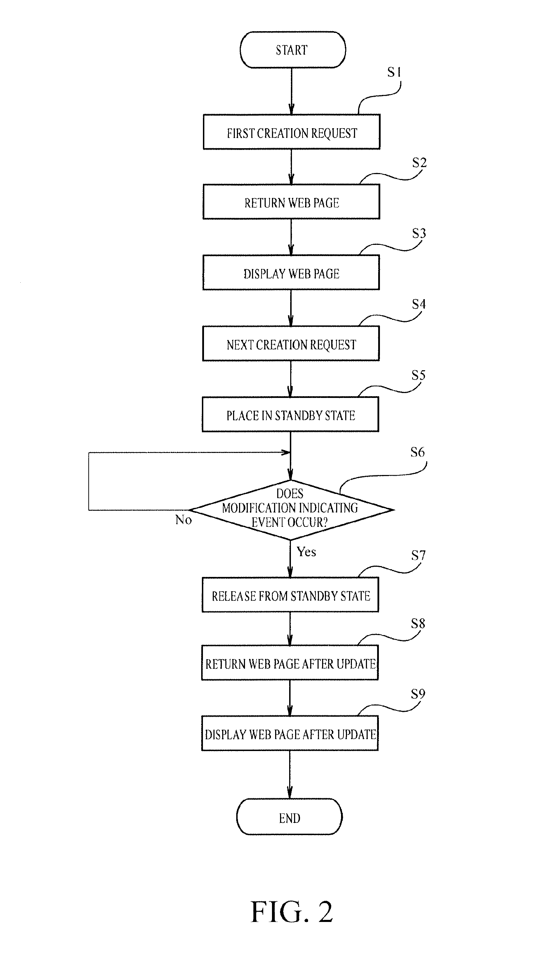

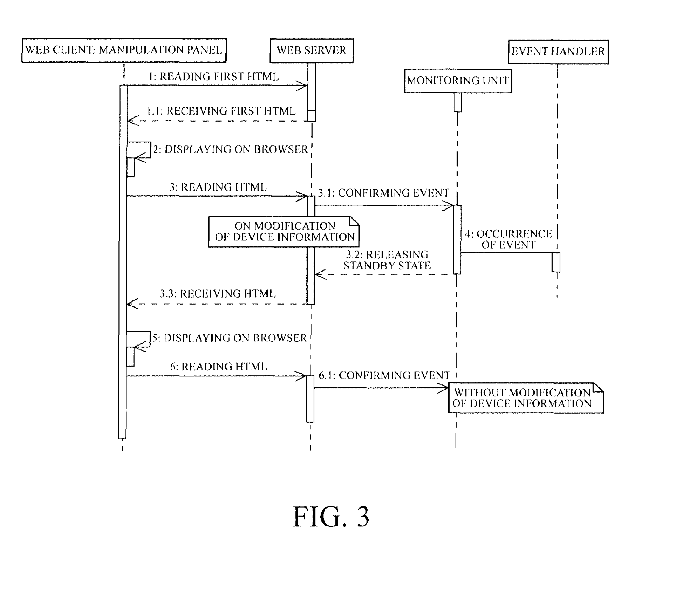

Fig. 2 is a flowchart illustrating display processing that can be executed by the image forming apparatus illustrated in Fig. 1. Fig. 3 is a sequence diagram illustrating the display processing executed by the image forming apparatus illustrated in Fig. 1.

In display processing executed in the first embodiment, a web page is displayed on the manipulation panel 5 in the image forming apparatus 1. The display processing is started when an activation manipulation is made on the manipulation panel 5.

First, at step S1 in Fig. 2 ("1: READING FIRST HTML" in Fig. 3), the panel controller 15 in the manipulation panel 5 causes the web client 17 to transmit a first creation request for the web page to the main controller 7.

At step S2 ("1.1: RECEIVING FIRST HTML" in Fig. 3), the main controller 7 causes the web server 19 to create a web page including device information in response to the first creation request. The web server 19 transmits the created web page to the panel controller 15 in the manipulation panel 5 as a response.

At step S3 ("2: DISPLAYING ON BROWSER" in Fig. 3), the panel controller 15 in the manipulation panel 5 receives the response and causes the web client 17 to display, on a browser on the display screen 11, a web page according to the received response.

At step S4 ("3: READING HTML" and "6: READING HTML" in Fig. 3), the panel controller 15 in the manipulation panel 5 causes the web client 17 to transmit a next creation request to the main controller 7 according to the response received at step S3.

At step S5, the main controller 7 causes the monitoring unit 23 to place the received creation request in a standby state.

At step S6 ("3.1: CONFIRMING EVENT" and "6.1: CONFIRMING EVENT" in Fig. 3), the occurrence of a modification indicating event for device information is confirmed. Specifically, the monitoring unit 23 determines whether there is a notification from the event handler 21.

If there is a notification from the event handler 21 (the result at step S6 is Yes, "4: OCCURRENCE OF EVENT" in Fig. 3), the process proceeds to step S7. If there is no notification from the event handler 21, the process at step S6 is repeated (the result at step S6 is No, "6.1: EVENT CONFIRMATION" in Fig. 3).

At step S7, the monitoring unit 23 releases the creation request from the standby state ("3.2: RELEASING STANDBY STATE" in Fig. 3).

At step S8 ("3.3: RECEIVING HTML" in Fig. 3), the main controller 7 causes the web server 19 to create a web page that includes device information updated after the modification indicating event has occurred, and in response to the creation request that had been placed in the standby state. The web server 19 then transmits the created web page to the panel controller 15 in the manipulation panel 5 as a response.

At step S9 ("5: DISPLAYING ON BROWSER" in Fig. 3), the panel controller 15 in the manipulation panel 5 receives the response and causes the web client 17 to display, on a browser on the display screen 11, a web page according to the response received after the update.

Thus, if a modification indicating event occurs for the device information after the web page has been displayed on the manipulation panel 5, the web page can be quickly and reliably updated in response to the creation request that has been placed in a standby state.

The image forming apparatus 1 in the first embodiment includes the web server 19 that creates a web page including modifiable device information. The web page is displayed on the manipulation panel 5, in response to a creation request transmitted from the manipulation panel 5. The image forming apparatus of the first embodiment also includes that the request standby unit (part of the monitoring unit 23), upon reception of the creation request from the manipulation panel 5 on which the web page is being displayed, places the received creation request in a standby state. The image forming apparatus of the first embodiment additionally includes the event handler 21 that detects an modification indicating event for device information, and the standby releasing unit (part of the monitoring unit 23) that releases the creation request from the standby state when a modification indicating event occurs and causes the web server 19 to create a web page including the modified device information.

Accordingly, after a web page has been displayed on the manipulation panel 5, when a modification indicating event for device information occurs, the web page can be quickly and reliably updated in response to a creation request that has been placed in a standby state.

As described above, since a push-type approach is taken, real-time nature can be improved without increasing the system load.

Since, in the first embodiment, the manipulation panel 5 is displayed with a web-based application, representation with more degrees of freedom becomes possible. In addition, since a general technology can be used, displays on the manipulation panel 5 can be easily customized, so costs required to develop the manipulation panel 5 can also be reduced.

Furthermore, since the same interface is provided for a remote device such as, for example, the user terminal 9 and for the manipulation panel 5 in the image forming apparatus 1, usability can also be improved.

In the first embodiment, when the manipulation panel 5 receives a response from the web server 19, a next creation request is made as a creation request used while a web page is being displayed.

Accordingly, in the first embodiment, a plurality of creation requests are not made while a web page is being displayed, so the system load can be reduced. In addition, the creation request can be quickly and reliably placed in a standby state, enabling the real-time nature to be improved.

Additionally, the manipulation panel 5 disposed in the main body of the image forming apparatus together with the web server 19 and the user terminal 9 disposed outside the main body of the image forming apparatus are used as client terminals. The monitoring unit 23 does not place a creation request from the user terminal 9 in a standby state, but places a creation request from the manipulation panel 5 in a standby state.

Therefore, in the first embodiment, an increase in the system load can be suppressed by limiting creation requests from the manipulation panel 5 only to a push-type mechanism. If a push-type mechanism is applied to all client terminals to place creation requests from them in a standby state, threads waiting for events will indiscriminately occur in the system. This may increase the system load. In the first embodiment, however, this problem can be suppressed.

### II. Second Embodiment

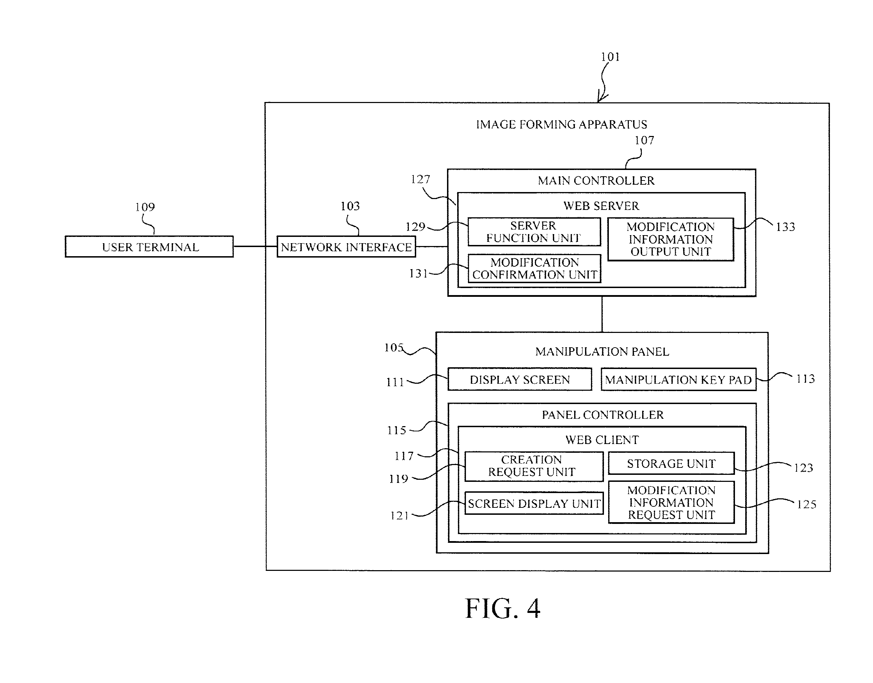

Fig. 4 illustrates the structure of an image forming apparatus according to the second embodiment of the present disclosure.

The image forming apparatus 101 in Fig. 4 can be, for example, a digital multifunctional peripheral that includes various image forming functions such as a copy function; a scan function; a print function; and a facsimile function. The digital multifunctional peripheral may also include web server functions that may be used to create web pages, and web client functions.

The image forming apparatus 101 in the second embodiment includes a network interface 103, a manipulation panel 105, and a main controller 107 as part of the server functions.

The network interface 103 transmits and receives data to and from a user terminal 109 that is connected to the network interface 103 through a local area network (LAN) or another network.

The user terminal 109 can be an extra-apparatus client terminal disposed outside the main unit of the image forming apparatus. The user terminal 109 includes a computer and other information processing apparatuses. The user terminal 109 can transmit a creation request for the web page (for example, a hypertext transfer protocol (HTTP) request) to the image forming apparatus 101. In addition, the user terminal 109 can receive a response transmitted from the image forming apparatus 101 and can display a web page according to the response (for example, an HTTP response) on a browser. The displayed web page can be used as manipulation inputs to manipulate the image forming apparatus 101, a manipulation state, and device information.

The displayed device information includes the settings and operation state of the image forming apparatus 101. This device information includes information that can be modified by operating the image forming apparatus 101 and by a manipulation input supplied by the user. Such information can include a setting state, for example print conditions, and an operation state, for example the number of counted sheets, an out-of-paper state, and a device error in a function.

The manipulation panel 105 can be an intra-apparatus client terminal disposed inside the main unit of the image forming apparatus. The manipulation panel 105 includes a display device that has a display screen 111, a manipulation key pad 113, and a panel controller 115.

The display screen 111 includes a touch-panel liquid crystal display screen and can display a web page via a browser. The display screen 111 can display manipulation inputs that may be used to manipulate the image forming apparatus 101, a manipulation state, and device information through the web page.

The manipulation key pad 113 includes a plurality of buttons to accept manipulation inputs, and other components. For example, the manipulation key pad 113 accepts inputs to execute functions of the image forming apparatus 1.

The panel controller 115 can be a computer with information processing functions. The panel controller 115 can include a central processing unit (CPU), a read-only memory (ROM), and a random-access memory (RAM).

The CPU is a control element (computing device) that executes a program to, for example, control a display based on inputs from display screen 111 and inputs from the manipulation key pad 113. The ROM stores programs and the like. The RAM is used as, for example, a working area that temporarily stores a program to be executed and data used during execution of the program.

The panel controller 115 in the second embodiment executes a client program according to an activation manipulation and operates as a web client 117. The activation manipulation can be performed by, for example, a user creating inputs from the manipulation key pad 113 and display screen 111.

The web client 117 includes a creation request unit 119, a screen display unit 121, a storage unit 123, and a modification information request unit 125.

The creation request unit 119 implements creation functions. The creation request unit 119 transmits a creation request for a web page to the main controller 107 at the time of activation of the manipulation panel 105 and causes the web server 127 to create a web page including modifiable device information.

Furthermore, the creation request unit 119 also transmits the web page request to the main controller 107 in response to a transition request from a currently displayed web page to another web page. The transition request is initiated by a user via the display screen 111 or the manipulation key pad 113 of the manipulation panel 105.

The screen display unit 121 implements screen display functions. The screen display unit 121 receives a response of the web page from the main controller 107. Based on the response, the screen display unit 121 displays the web page on a browser of the display screen 111. The transition request to the other web page corresponds to the displayed web page based on the response.

The storage unit 123 implements storage functions and stores configuration information of the received web page. The configuration information is stored in a cash memory in the CPU or the RAM or the like of the panel controller 115 until the transition request to the other web page occurs.

The configuration information can include a template and various types of information, for example the modifiable device information.

The modification information request unit 125 implements modification information request functions. The modification information request unit 125 determines whether there is a transition request from the currently displayed web page to the other web page. The modification information request unit 125 outputs an output request for the modification information to modify the device information unless there is a transition request, and causes the web server 127 of the main controller 107 to transmit modification information.

The output request for the modification information can be performed by a custom protocol. In the second embodiment, the output request is performed through an inter socket communication between the panel controller 115 and the main controller 107 using Transmission Control Protocol/Internet Protocol (TCP/IP) or the like. The output request is performed at specific intervals by polling.

The web client 117 receives the modification information from the main controller 107. When receiving the modification information, the screen display unit 121 displays a modified web page that reflects the received modification information. Then the configuration information of the stored web page is updated.

Specifically, the storage unit 123 overwrites the stored configuration information of the web page with the received modification information. The screen display unit 121 reads the overwritten configuration information to display. Alternatively, the screen display unit 121 can read the stored configuration information to overwrite the received modification information.

In the second embodiment, web client 117 is applied to the panel controller 115, alternatively, can be applied to the main controller 107 as well.

The main controller 107 implements information processing functions and includes a CPU, a ROM, and a RAM similar to the panel controller 115. In the main controller 107, the CPU executes a program to control the system of the image forming apparatus 101 and to perform other processing.

In the second embodiment, the main controller 107 in the second embodiment executes server programs to operate as a web server 127. The web server 127 includes a server function unit 129, a modification information confirmation unit 131, and a modification information output unit 133.

The server function unit 129 creates a web page in response to a creation request from the user terminal 109 or the manipulation panel 105 (the web client 117). The web page includes current device information at the time of creation request reception. The web page is written in, for example, Hypertext Makeup Language (HTML). The web server 127 transmits the created web page to the user terminal 109 or manipulation panel 105, from which the creation request has been transmitted, as a response.

The modification information confirmation unit 131 determines whether there is modification information for the device information in response to the output request for the modification information from the web client 117. Specifically, when receiving the output request for the modification information, the modification information confirmation unit 131 determines whether or not the device information is modified between a last reception of the creation request for the web page and a reception of the output request. If the device information is modified (i.e., is if there is modification information), the modification information confirmation unit 131 gives an output instruction of the modification information to the modification information output unit 133. The device information and the modification information are stored the RAM or the like of the main controller 107.

The modification information output unit 133 outputs the modification information that is determined by the modification information confirmation unit 131. Specifically, when receiving the output instruction from the modification information confirmation unit 131, the modification information output unit 133 outputs the modification information. The modification information is output with a command response corresponding to data that is designated by a custom protocol.

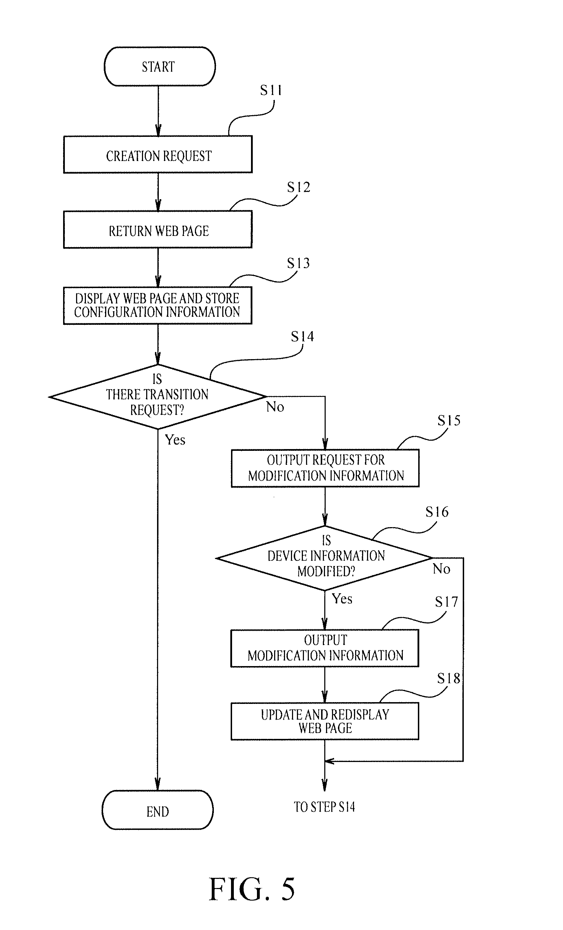

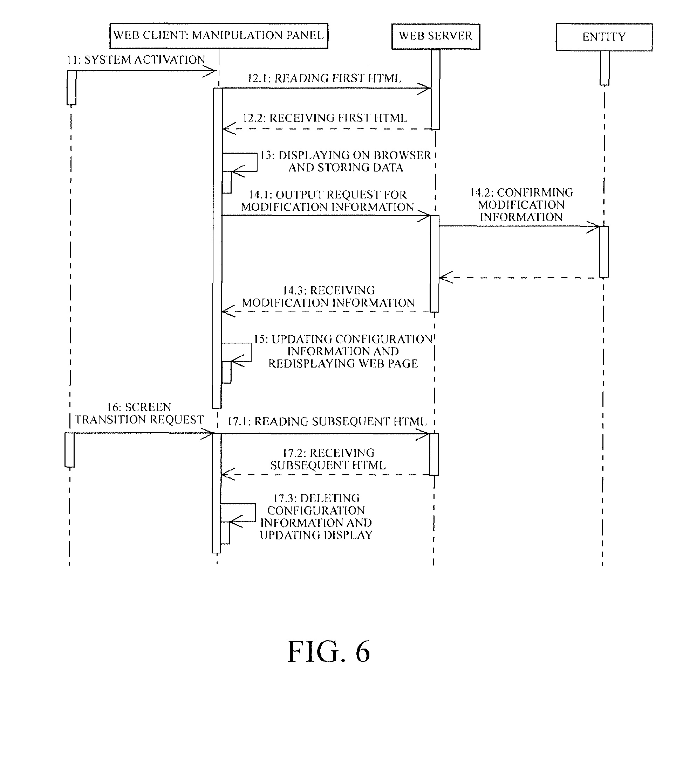

Fig. 5 is a flowchart illustrating display processing executed by the image forming apparatus in Fig. 4. Fig. 6 is a sequence diagram illustrating the display processing executed by the image forming apparatus in Fig. 4.

In display processing executed in the second embodiment, a web page is displayed on the manipulation panel 105 in the image forming apparatus 101. The display processing is started, as illustrated "11: SYSTEM ACTIVATION" and "16: SCREEN TRANSITION REQUEST" in Fig. 6, when an activation manipulation of the system or a transition request for the other web page is made on the manipulation panel 105.

First, at step S11 in Fig. 5 ("12.1: READING FIRST HTML" in Fig. 6), the panel controller 115 in the manipulation panel 105 causes a creation request unit 119 to transmit the creation request for the web page to the main controller 107.

At step S12 ("12.2: RECEIVING FIRST HTML" in Fig. 6), the main controller 107 causes the server function unit 129 to create a web page including modifiable device information in response to the creation request. The server function unit 129 transmits the created web page to the web client 117 as a response.

At step S13 ("13: DISPLAYING ON BROWSER AND STORING DATA" in Fig. 6), the web client 117 receives the response and causes the screen display unit 121 to display, on a browser on the display screen 111, a web page according to the received response. Then the storage unit 123 of the web client 117 stores, on the basis of the received response, configuration information of the web page into a cash memory, the RAM or the like in the CPU of the panel controller 115.

At step S14, the modification information request unit 125 of the web client 117 determines whether there is a transition request from the currently displayed web page to another web page. Specifically, the modification information request unit 125 determines a manipulation input for the transition request on the manipulation panel 105.

If there is the transition request (the result at step S14 is Yes, "16: SCREEN TRANSITION REQUEST" in Fig. 6), the display processing is terminated. Once terminated, another display processing is started and the web page to be displayed is updated.

In the other display processing, the processes from step S11 to step S13 ("17.1: READING SUBSEQUENT HTML", "17.2: RECEIVING SUBSEQUENT HTML", and "17.3: DELETING CONFIGURATION INFORMATION AND UPDATING DISPLAY" in Fig. 6) are performed in the same manner as described above. Additionally, at step S13 ("18: DELETING CONFIGURATION INFORMATION AND UPDATING DISPLAY" in Fig. 6), the panel controller 115 deletes the configuration information of the existing web page. On the other hand, if there is no transition request (the result at step S14 is No), the process then proceeds to step S15.

At step S15 ("14.1: OUTPUT REQUEST FOR MODIFICATION INFORMATION" in Fig. 6), the modification information request unit 125 transmits, to the web server 127, an output request for the modification information regarding the modifiable device information using a custom protocol.

At step S16 ("14.2: CONFIRMING MODIFICATION INFORMATION" in Fig. 6), the modification confirmation unit 131 of the web server 127 determines whether there is modification information for the device information in response to the output request for the modification information. In other words, the modification confirmation unit 131 determines whether or not the device information is modified between a last reception of the creation request at step S12 and a reception of the output request. Specifically, the modification confirmation unit 131 determines, for each entities managing ("ENTITY" in Fig. 6) a setting state and an operation state, whether or not the device information is modified, according to a setting state, for example print conditions, and an operation state, for example the number of counted sheets, an out-of-paper state, and a device error in a function. For example it is determined whether or not the number of counted sheets, for a counter of sheet as the entity, is modified.

If the device information is modified (the result at step S16 is Yes in Fig. 6), the process proceeds to step S17. If the device information is not modified (the result at step S16 is No in Fig. 6), the process returns to step S14.

At step S17 ("14.3: RECEIVING MODIFICATION INFORMATION" in Fig. 6), the modification information output unit 133 of the web server 127 outputs the confirmed modification information at step S16 as a command response corresponding to data designated by the custom protocol.

At step S18 ("15: UPDATING CONFIGURATION INFORMATION AND REDISPLAYING WEB PAGE" in Fig. 6), the storage unit 123 of the web client 117 overwrites the stored configuration information of the web page with the modification information received from the web server 127. Then the configuration information is updated. Furthermore, the web page is updated by reflecting the modification information to the configuration information. The screen display unit 121 of the web client 117 displays the updated web page on the basis of the modified configuration information.

When step S18 is terminated, the process returns to step S14. After returning to step S14, the processes from step S15 to step S18 is repeated unless there is a transition request.

In the second embodiment, web client 117 includes the creation request unit 119 that outputs a creation request for a web page and causes the web server 127 to create the web page including modifiable device information. The web client 117 also includes the storage unit 123 that stores configuration information of the web page received from the web server 127, the modification information request unit 125 that outputs an output request for the modification information to modify the device information unless there is the transition request from a currently displayed web page to another web page, and causes the web server 127 to transmit modification information, and the screen display unit 121 that displays the received web page and an updated web page on the basis of the modified configuration information reflecting the modification information when receiving the modification information from the web server 127.

Therefore, since the web server 127 is caused to transmit the modification information unless there is the transition request from the currently displayed web page to the other web page, the web client 117 can suppresses the system load even if a polling interval is decreased.

Accordingly, the real-time nature can be improved without increasing the system load.

Furthermore, the web page can be quickly and reliably updated by updating the configuration information of the stored web page with the received modification information from the web server 127.

The web client 117 can output an output request for the modification information by a custom protocol, for example the inter socket communication, and cause the web server 127 to transmit modification information.

Accordingly, the request and reception of the transition request is quickly performed, and the real-time nature can be improved without increasing the system load.

Furthermore, the communication performance can be improved since the command communication is only required to be limited to a modified portion of the device information.

The image forming apparatus 101 in the second embodiment includes the web client 117 and the web server 127. The web client 117 configures the manipulation panel 105 with the display screen 111 for displaying the web page.

Accordingly, the real-time nature can be improved without increasing the system load even if the image forming apparatus 101 displays the web page from its own web server 127 on its own manipulation panel 105.

Since, in the second embodiment, the manipulation panel 5 is displayed with a web-based application, representation with more degrees of freedom can be possible.

Furthermore, since the same interface is provided for a remote device such as, for example, the user terminal 109 and for the manipulation panel 105 in the image forming apparatus 101, usability can also be improved.

In the second embodiment, the web server 127 in the image forming apparatus 101 includes the server function unit 129 that creates a web page in response to the creation request for the web page. The web server 127 also includes the modification confirmation unit 131 that determines whether there is modification information for the device information in response to the output request for the modification information, and the modification information output unit 133 that outputs the modification information that is determined by the modification information confirmation unit 131.

The image forming apparatus 101 according to the second embodiment can suppress the system load and improve the real-time nature since the processing is performed without passing via the server function unit 129 at the time of reception of the output request for the transition information.

It should be understood that various changes and modifications to the presently embodiments described herein will be apparent to those skilled in the art. Such changes and modifications can be made without departing from the spirit and scope of the present subject matter and without diminishing its intended advantages. It is therefore intended that such changes and modifications be covered by the appended claims.

## Claims

1. An image forming apparatus (1) comprising:
a server (19) configured to create a web page including modifiable device information, wherein the web page is displayed on a client terminal in response to a creation request transmitted from the client terminal;
a request standby unit configured to place the received creation request in a standby state upon reception of the creation request from the client terminal on which the web page is being displayed;
an event detecting unit (21) configured to detect a modification indicating event for the device information; and
a standby releasing unit configured to:
release the creation request from the standby state when the modification indicating event occurs; and
cause the server (19) to create a web page that includes modified device information.

2. The image forming apparatus (1) according to Claim 1, wherein the client terminal is configured to, upon receipt of a response for the web page from the server (19), transmit a creation request while the web page is being displayed.

3. The image forming apparatus (1) according to Claim 1 or 2, wherein:
the client terminal comprises at least one of an intra-apparatus client terminal (5) disposed in a main body of the image forming apparatus (1) together with the server (19) or an extra-apparatus client terminal (9) disposed outside the main body of the image forming apparatus (1), and
the request standby unit is configured to place a creation request from the intra-apparatus client terminal (5) in a standby state.

4. The image forming apparatus (1) according to Claim 3, wherein the intra-apparatus client terminal (5) is a display device that has a display screen (11) on which the web page is displayed.

5. A display method comprising:
creating, via a server (19), a web page including modifiable device information, wherein the web page is displayed on a client terminal, in response to a creation request transmitted from the client terminal;
placing, via a request standby unit, the received creation request in a standby state upon reception of the creation request from the client terminal on which the web page is being displayed;
detecting, via an event detecting unit (21), the modification indicating event for the device information;
releasing, via a standby releasing unit, the creation request from the standby state when the modification indicating event occurs; and
causing, via the standby releasing unit, the server (19 to create a web page that includes modified device information.

6. An image forming apparatus (101) comprising:
a server (127); and
a web client (117) comprising:
a creation request unit (119) configured to output a creation request for a web page and cause the server (127) to create the web page including modifiable device information;
a storage unit (123) configured to store configuration information of the web page received from the server (127);
a modification information request unit (125) configured to:
output an output request for the modification information to modify the device information when there is no transition request from a currently displayed web page to another web page; and
cause the server (127) to transmit modification information; and
a screen display unit (121) configured to:
display the received web page on a display screen (111); and
display, on the display screen (111), an updated web page on the basis of the modified configuration information reflecting the modification information when receiving the modification information from the server (127).

7. The image forming apparatus (101) according to Claim 6, wherein the web client (117) is applied to a display device (105) that has a display screen (111).

8. The image forming apparatus (101) according to Claim 6 or 7, wherein the modification information request unit (125) is configured to output the output request using a custom protocol.

9. The image forming apparatus (101) according to Claim 9, wherein the custom protocol comprises an inter socket communication.

10. The image forming apparatus (101) according to Claim 9, wherein the inter socket communication comprises Transmission Control Protocol/Internet Protocol (TCP/IP).

11. The image forming apparatus (101) according to any of Claims 6 to 10, wherein the server (127) comprises:
a server function unit (129) configured to create a web page in response to the creation request for the web page;
a modification confirmation unit (131) configured to, in response to the output request for the modification information from the web client (117), determine whether there is modification information for device information; and
a modification information output unit (133) configured to output the modification information that is determined by the modification information confirmation unit (131).

12. A display method comprising:
outputting, via a creation request unit (119), a creation request for a web page;
causing, via the creation request unit (119), a server (127) to create the web page including modifiable device information;
storing, via a storage unit (123), configuration information of the web page received from the server (127);
outputting, via a modification information request unit (125), an output request for the modification information to modify the device information when there is no transition request from a currently displayed web page to another web page;
causing, via the modification information request unit (125), the server (127) to transmit modification information;
displaying, via a screen display unit (121), the received web page on a display screen (111); and
displaying, via the screen display unit (121), on the display screen (111), an updated web page on the basis of the modified configuration information reflecting the modification information when receiving the modification information from the server (127).
